# EUROPÄISCHE PATENTANMELDUNG

(11) **EP 4 120 795 A1**
(43) Veröffentlichungstag der Anmeldung: **18.01.2023**
(21) Anmeldenummer: 22181780.2
(22) Anmeldetag: 29.06.2022
(51) Int. Cl.: H05B 3/06, H05B 3/14, B44B 7/00, B44B 7/02, B29C 33/42

(54) **VORRICHTUNG ZUR AUSBILDUNG VON KENNZEICHNUNGEN ODER MUSTERN**

(30) Priorität: 12.07.2021 DE 102021207317
(71) Anmelder: Fraunhofer-Gesellschaft zur Förderung der angewandten Forschung e.V., 80686 München (DE)
(72) Erfinder: Mattheß, Danilo, 01187 Dresden (DE)
(74) Vertreter: Pfenning, Meinig & Partner mbB

(57) **Zusammenfassung**

Bei der Vorrichtung sind mehrere Erwärmungseinheiten (1), an denen jeweils eine elektrisch leitfähige Oberfläche (2) in bekannter Anordnung zueinander und mit bekannter Geometrie und Dimensionierung sowie einer Anordnung aller elektrisch leitfähigen Oberflächen (2) in einer Ebene angeordnet sind und an den elektrisch leitfähigen Oberflächen (2) jeweils mindestens zwei elektrische Anschlusskontakte vorhanden sind, die mit einer elektrischen Steuereinheit so verbunden sind, dass jede einzelne elektrisch leitfähige Oberfläche (2) gesondert ansteuerbar ist, so dass über elektrische Leitungen ein definierter elektrischer Strom durch die jeweilige elektrisch leitfähige Oberfläche (2) ein oder kein elektrischer Strom fließt, so dass bei einem Aufsetzen der elektrisch leitfähigen Oberflächen (2) auf die jeweilige Oberfläche des Objektes ein mittels der elektronischen Steuerung vorgegebenes Kennzeichen oder Muster eingebrannt wird.

## Beschreibung

Die Erfindung betrifft eine Vorrichtung zur Ausbildung von Kennzeichnungen oder Mustern, die auf einer aus einem organischen Material gebildeten Oberfläche eines Objektes ausgebildet werden.

Es können UV-stabile, wasserfeste Kennzeichnungen oder Muster auf organischen Materialien, wie z. B. Holz, Leder, Pappe, Kunststoff, Kork oder Filz ausgebildet werden. Mit diesen lassen sich Informationen vermitteln, um beispielsweise Objekte als Eigentum oder deren Herkunft zu kennzeichnen oder dem Werkstoff durch das Einbrennen von Motiven, Logos oder Initialen ein spezifisches Aussehen zu verleihen.

Zum derzeitigen Stand der Technik erfolgt die Anbringung solcher Kennzeichnungen oder Muster durch das Einbrennen unter großer Hitzeentwicklung. Hierfür werden Brennstempel, die durch aufwändiges Gravieren einer Metallplatte mit dem Wunschmotiv hergestellt werden, verwendet. Durch diese Methodik ist eine Veränderung des Motivs nachträglich nicht mehr möglich. Für jedes weitere Motiv muss eine neue Metallplatte angefertigt werden. Eine Alternative bieten Brennstempel mit austauschbaren Wechselplattenelementen, die in eine Grundplatte eingeschoben werden. Bei diesen Stempeln lässt sich durch Zusammensetzen von einzelnen Buchstaben, Zahlen und Sonderzeichen der Schriftzug oder die Seriennummer erzeugen.

Trotz dieser Flexibilität weisen diese Stempel Nachteile auf. So können nur Texte mit gleicher Schrifthöhe verwendet werden und die Auswahl der Schriftart ist sehr stark eingeschränkt. Zudem können Logos und kleinere Motive nicht individuell angeordnet werden. Die Kennzeichnung mit einem Strich- oder QR-Code, der nur einmal vergeben wird, ist nicht möglich. Der Austausch der Brennplatten ist zeitintensiv und kann nur im kalten Zustand erfolgen, da aufgrund des heißen Stempels eine Verbrennungsgefahr besteht.

Eine weitere Möglichkeit der Kennzeichnung bieten Laser, welche die Oberfläche gezielt verbrennen und somit das Wunschmotiv aufbringen. Nachteilig sind allerdings die sehr hohen Investitionskosten sowie die enormen Sicherheitsvorschriften, die nur durch geschultes Personal eingehalten werden können. Überdies ermöglichen Laser keine mobile und flexible Kennzeichnung großer, sperriger Gegenstände oder von Gegenständen mit komplexen bzw. wechselnden Formen, da Laser zumeist stationär betrieben werden. Dies setzt das Vorhandensein eines Schutzraumes voraus, in dem das zu markierende Objekt präzise ausgerichtet und der Laser fokussiert werden kann.

Es ist daher Aufgabe der Erfindung, Möglichkeiten anzugeben, mit denen unterschiedliche Kennzeichnungen oder Muster auf Oberflächen von Objekten mit erhöhter Flexibilität und geringen Kosten dauerhaft ausgebildet werden können.

Erfindungsgemäß wird diese Aufgabe mit einer Vorrichtung, die die Merkmale des Anspruchs 1 aufweist, gelöst. Vorteilhafte Ausgestaltungen und Weiterbildungen können mit in abhängigen Ansprüchen bezeichneten Merkmalen realisiert werden.

Bei der Erfindung sind mehrere Erwärmungseinheiten, an denen jeweils eine elektrisch leitfähige Oberfläche oder elektrisch leitfähige Schicht, die in Richtung Objekt von einer thermisch leitfähigen Schicht überdeckt ist, vorhanden ist, in bekannter Anordnung zueinander und mit bekannter Geometrie und Dimensionierung ihrer elektrisch leitfähigen Oberflächen oder elektrisch leitenden mit zugehörigen thermisch leitfähigen Schichten angeordnet sind. Optional können alle elektrisch leitfähigen Oberflächen oder thermisch leitfähigen Schichten in einer Ebene angeordnet sein.

An den elektrisch leitfähigen Oberflächen oder elektrisch leitenden Schichten sind jeweils mindestens zwei elektrische Anschlusskontakte vorhanden, die mit einer elektrischen Steuereinheit so verbunden sind, dass jede einzelne elektrisch leitfähige Oberfläche oder elektrisch leitende Schicht gesondert ansteuerbar ist, so dass über elektrische Leitungen ein definierter elektrischer Strom durch die jeweilige elektrisch leitfähige Oberfläche oder elektrisch leitende Schicht oder kein elektrischer Strom fließt, so dass bei einem Aufsetzen der elektrisch leitfähigen Oberflächen oder thermisch leitfähigen Schichten auf die jeweilige Oberfläche des Objektes ein mittels der elektronischen Steuerung vorgegebenes Kennzeichen oder Muster eingebrannt wird. Dabei kann an der jeweiligen Oberfläche des Objektes organisches Material teilweise oder vollständig oxidiert werden.

Die elektronische Steuereinheit sollte dabei so ausgebildet sein, dass sie die elektrisch leitfähigen Oberflächen oder elektrisch leitenden Schichten einzeln ansteuern kann, so dass ein oder mehrere elektrische leitfähige Oberflächen oder elektrisch leitende Schichten mit zugehörigen thermisch leitfähigen Schichten gleichzeitig ausreichend erwärmt werden können. Die Positionen und die Anzahl gleichzeitig erwärmter elektrisch leitfähiger Oberflächen oder elektrisch leitenden Schichten mit zugehörigen thermisch leitfähigen Schichten kann entsprechend der gewünschten Kennzeichnung oder eines Musters vorgegeben und die entsprechenden elektrisch leitfähigen Oberflächen oder elektrisch leitenden Schichten mit der elektronischen Steuereinheit angesteuert werden, dass sie entsprechend mit elektrischem Strom einer elektrischen Spannungsquelle durchflossen werden können.

Vorteilhaft können die elektrisch leitfähigen Oberflächen oder elektrisch leitenden Schichten und/oder die elektrischen Leitungen mit einem elektrisch leitfähigen Material gebildet und auf die aus ansonsten elektrisch nicht leitendem Material (z.B. einer Keramik) gebildeten Erwärmungseinheiten als elektrische Leiterbahnen aufgedruckt sein.

Die Querschnittsfläche der elektrischen Leitungen sollte größer als die Querschnittsfläche der elektrisch leitenden Oberflächen oder elektrisch leitenden Schichten sein.

Die elektronische Steuerung kann an eine elektrische Spannungsquelle angeschlossen sein, mit der ein elektrischer Stromfluss durch die elektrisch leitfähigen Oberflächen oder elektrisch leitenden Schichten erreichbar ist, mit dem eine Erwärmung der elektrisch leitfähigen Oberflächen oder thermisch leitfähigen Schichten auf eine Temperatur von mindestens 250 °C, bevorzugt mindestens 300 °C erreichbar ist.

Der durch die jeweiligen elektrisch leitfähigen Oberflächen oder elektrisch leitenden Schichten fließende elektrische Strom kann jeweils individuell einstellbar sein. Dadurch können Kennzeichnungen oder Muster noch variabler ausgebildet werden, da an einzelnen elektrisch leitfähigen Oberflächen oder thermisch leitfähigen Schichten unterschiedliche Temperaturen eingehalten werden können, die dazu führen können, dass auch unterschiedliche Verfärbungen an den entsprechenden Positionen der Oberfläche des jeweiligen Objektes ausgebildet werden können.

Die elektrisch leitfähigen Oberflächen oder elektrisch leitenden Schichten mit den jeweiligen zugehörigen thermisch leitfähigen Schichten können in einer Reihen-, Reihen- und Spaltenanordnung oder in einer Anordnung mit mehreren Kreisringen, die unterschiedliche Durchmesser aufweisen, angeordnet sein.

Elektrisch leitfähige Oberflächen oder thermisch leitfähige Schichten können mit einer Fläche kleiner 1 mm² ausgebildet sein. Allein oder zusätzlich dazu kann zwischen nebeneinander angeordneten elektrisch leitfähigen Oberflächen oder thermisch leitfähigen Schichten ein Spaltmaß von maximal 0,1 mm eingehalten sein.

Bei der Erfindung können Erwärmungseinheiten eingesetzt werden, bei denen die jeweilige Oberfläche, die mit der Oberfläche des Objektes in Kontakt gebracht wird, mit einer thermisch leitfähigen Schicht gebildet wird. Die thermisch leitfähige Schicht überdeckt dabei eine elektrisch leitende Schicht teilweise oder vollständig. Elektrisch leitende Schichten können mittels elektrischer Widerstandsbeheizung ausreichend erwärmt werden, so dass an der Oberfläche der jeweiligen thermisch leitfähigen Schicht, die in Richtung Objekt weist, infolge thermischer Leitung eine ausreichende hohe Temperatur erreicht wird, um ein Pixel eines Musters oder Kennzeichens an der Oberfläche auszubilden, wenn ein ausreichend großer elektrischer Strom durch die jeweilige elektrisch leitende Schicht fließt. Thermisch leitfähige Schichten können mit einem Polymer oder keramischem Werkstoff gebildet sein. Vorteilhaft sollten diese Werkstoffe so ausgewählt werden, dass Anhaftungen von Objektmaterial vermieden, zumindest reduziert werden. Dies kann mit Keramik oder einem Polymer z.B. auf PTFE-Basis erreicht werden.

Thermisch leitfähige Schichten können eine geringe Schichtdicke, beispielsweise von maximal 2 mm, bevorzugt maximal 1,5 mm und besonders bevorzugt von maximal 1 mm aufweisen.

Die Erfindung basiert somit auf einem Matrixfeld, das aus einer Vielzahl von Erwärmungseinheiten besteht, die in einer vorgegebenen Anordnung (z.B. Rechteckanordnung) zueinander eingesetzt werden können. Durch eine Vielzahl an aktivierbaren und deaktivierbaren elektrisch leitenden Oberflächen oder elektrisch leitenden Schichten der Erwärmungseinheiten kann die jeweils gewünschte Kennzeichnung oder das jeweils gewünschte Muster aus einfachen geometrischen Grundformen bis hin zu komplexen Logos auf einer Oberfläche des jeweiligen Objektes ausgebildet werden. Die erhitzten bzw. aktivierten Erwärmungseinheiten bilden so durch Aufpressen der ausreichend erwärmten Oberflächen auf eine Oberfläche eines jeweiligen Objektes aus organischem Werkstoff UV-stabile, wasserfeste und nur durch Materialabtragung entfernbare Kennzeichnungen oder Muster.

Des Weiteren sind für das Abdrucken möglichst scharfer Kanten sowie gleichmäßig gefüllter Flächen des jeweiligen Kennzeichens oder Musters einerseits ein großer Temperaturgradient zwischen den ausreichend erwärmbaren elektrisch leitfähigen Oberflächen oder thermisch leitfähigen Schichten und andererseits eine möglichst dichte Anordnung der einzelnen ausreichend erwärmbaren elektrisch leitfähigen Oberflächen oder thermisch leitfähigen Schichten zueinander notwendig. Ein gut umsetzbarer Abstand zwischen den einzelnen erwärmbaren elektrisch leitfähigen Oberflächen oder thermisch leitfähigen Schichten ist mit ca. 0,1 mm realisierbar.

Die Erwärmung an einer einzelnen Erwärmungseinheit erfolgt gemäß des Joulschen Gesetzes. Hierbei kann ein elektrischer Widerstandsbereich eine geometrische Verengung zwischen einem ersten elektrischen Anschlusskontakt und einem zweiten elektrischen Anschlusskontakt gebildet sein, der einen elektrisch leitfähigen Oberflächenbereich oder elektrisch leitende Schicht bildet.

Die Anordnung eines elektrisch leitfähigen Oberflächenbereichs, der durch elektrische Widerstandserwärmung beheizbar ist und mit dem ein Pixel eines Kennzeichens oder Musters ausgebildet werden kann, sollte so ausgeführt sein, dass nur im Bereich der jeweiligen ausreichend erwärmbaren elektrisch leitfähigen Oberfläche eine signifikante Erwärmung (Erwärmungsbereich) erfolgt. Dies trifft analog auch auf die Anordnung elektrisch leitender Schichten mit jeweils zugeordneten thermisch leitfähigen Schichten zu. Diese Effekte werden vor allem dadurch unterstützt, dass die elektrischen Anschlusskontakte außerhalb des elektrischen Widerstandheizbereichs einer elektrisch leitfähigen Oberfläche oder elektrisch leitenden Schicht einen deutlich größeren Leitungsquerschnitt und damit auch einen geringeren elektrischen Widerstand aufweist. Die dadurch geringere Wärmeentwicklung in diesem Bereich kann durch eine Wärmeableitung in die elektrischen Anschlusskontakte zusätzlich unterstützt werden. Als eine weitere Alternative, die man allein oder zusätzlich zu dieser Querschnittsveränderung einsetzen kann, besteht darin die elektrischen Anschlusskontakte sowie die elektrischen Leitungen aus einem Werkstoff mit einem geringeren spezifischen elektrischen Widerstand auszubilden, als dem Werkstoff, mit dem die elektrisch leitfähigen Oberflächen oder elektrisch leitenden Schichten gebildet sind. So können die Anschlusskontakte und Leitungen aus einem Metall (z.B. Kupfer) und die elektrisch leitfähigen Oberflächen oder elektrisch leitenden Schichten aus einem elektrisch leitfähigen keramischen Werkstoff (z.B. SiC oder MoSi2) oder einer Stahllegierung bestehen.

Die Herstellung der filigranen Erwärmungseinheiten kann mittels 3D-Druck realisiert werden.

Die Leistungselektronik der elektronischen Steuerung, welche die Erwärmung der einzelnen Erwärmungseinheiten beeinflusst, sowie die Schnittstelle zu einer Verarbeitungssoftware können in die Vorrichtung integriert sein. Die Abmessungen und das Gewicht der Vorrichtung übertreffen hierbei die eines konventionellen Brennstempels nur geringfügig. Somit ist gewährleistet, dass die Erfindung als Handgerät bedient werden kann. Eine intelligente Verarbeitungssoftware sowie die intuitive Benutzeroberfläche, in welche ein zu stempelndes Kennzeichen oder Muster oder ein Schriftzug eingefügt werden kann, erlaubt es jedes beliebige Muster oder Kennzeichen an einer Oberfläche eines Objekts auszubilden. Die Benutzeroberfläche kann hierbei beispielsweise browserbasiert ausgeführt sein. Eine Abstufung (Graustufen) einzelner Bildpunkte kann durch eine geringere Ansteuerung ausgewählter Erwärmungseinheiten erreicht werden.

Die Erfindung ermöglicht es eine schnelle und kostengünstige Kennzeichnung oder Musterung zu erzeugen. Im Vergleich zu konventionellen Brennstempeln, mit gravierten Motivplatten gestattet die Erfindung durch das steuerbare Matrixfeld ein deutlich flexibleres und umfangreicheres Anwendungsspektrum.

Nachfolgend soll die Erfindung beispielhaft näher erläutert werden.

Dabei zeigt:

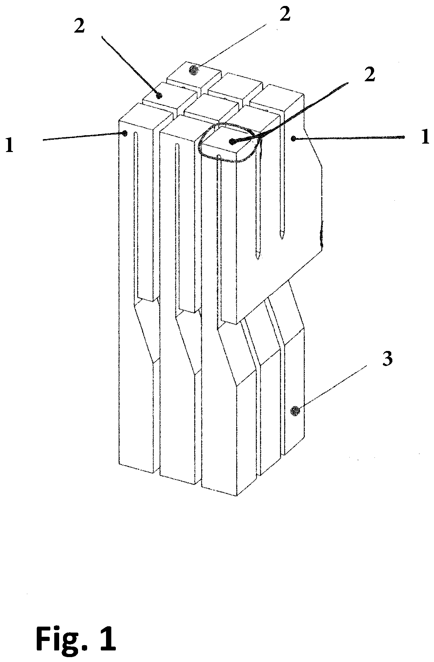

- Figur 1: ein Beispiel einer erfindungsgemäßen Vorrichtung.

In Figur 1 wird ein Beispiel einer Vorrichtung in einer perspektivischen Darstellung gezeigt. Dabei weist die Vorrichtung neun Erwärmungseinheiten 1 auf, die in einer Reihen- und Spaltenanordnung angeordnet sind. Die Anzahl der Erwärmungseinheiten 1 kann auch deutlich größer gewählt werden. Die Erwärmungseinheiten 1 und ein Träger 3 dazu können aus einem keramischen elektrisch nicht leitenden Werkstoff gebildet sein.

An nach der hier oben bzw. in Richtung einer Oberfläche eines Objektes, an der ein Kennzeichen oder ein Muster ausgebildet werden soll, weisenden Stirnflächen der Erwärmungseinheiten 1 ist jeweils eine elektrisch leitfähige Oberfläche 2 vorhanden. Die elektrisch leitfähigen Oberflächen 2 sind bei diesem Beispiel in einer gemeinsamen Ebene angeordnet. An jeder der elektrisch leitfähigen Oberflächen 2 sind zwei elektrische Anschlusskontakte vorhanden, die wiederum über elektrische Leitungen (nicht gezeigt) zu einer elektrischen Spannungsquelle geführt sind. Mittels einer ebenfalls nicht dargestellten elektronischen Steuereinheit kann jede einzelne elektrisch leitfähige Oberfläche 2 angesteuert werden, so dass sie in einem aktivierten Zustand von elektrischem Strom durchflossen und durch elektrische Widerstandsbeheizung erwärmt werden kann. Bei einer Deaktivierung fließt kein elektrischer Strom durch eine elektrisch leitfähige Oberfläche 2.

Dadurch ist es möglich bei einem Aufsetzen der elektrisch leitfähigen Oberflächen 2 auf eine Oberfläche eines Objektes ein Kennzeichen oder ein Muster in Abhängigkeit der jeweils gleichzeitig aktivierten elektrisch leitfähigen Oberflächen 2 auszubilden.

Die elektrisch leitfähigen Oberflächen 2, die elektrischen Anschlusskontakte sowie die elektrischen Leitungen können mit einem additiven Fertigungsverfahren hergestellt werden. Dies kann auch bei dem Träger 3 und den Erwärmungseinheiten 1 der Fall sein.

In nichtdargestellter Form können anstelle der elektrisch leitfähigen Oberflächen 2 thermisch leitfähige Schichten, die elektrisch leitende Schichten überdecken, eingesetzt werden. Die elektrisch leitfähigen Schichten können analog zu den elektrisch leitfähigen Oberflächen 2 mit elektrischem Strom widerstandsbeheizt werden. Durch thermische Leitung wird dann die jeweilige thermisch leitfähige Schicht ebenfalls ausreichend erwärmt.

## Patentansprüche

1. Vorrichtung zur Ausbildung von Kennzeichnungen oder Mustern auf einer aus einem organischen Material gebildeten Oberfläche eines Objektes bei der
mehrere Erwärmungseinheiten (1), an denen jeweils eine elektrisch leitfähige Oberfläche (2) oder eine elektrisch leitende Schicht, die in Richtung Objekt von einer thermisch leitfähigen Schicht überdeckt ist, vorhanden ist, in bekannter Anordnung zueinander und mit bekannter Geometrie und Dimensionierung ihrer elektrisch leitfähigen Oberflächen (2) oder elektrisch leitenden mit zugehörigen thermisch leitfähigen Schichten sowie einer Anordnung aller elektrisch leitfähigen Oberflächen (2) oder thermisch leitfähigen Schichten, die oberhalb elektrisch leitender Schichten in Richtung des jeweiligen Objekts angeordnet sind, in einer Ebene angeordnet sind und
an den elektrisch leitfähigen Oberflächen (2) oder elektrisch leitenden Schichten jeweils mindestens zwei elektrische Anschlusskontakte vorhanden sind, die mit einer elektrischen Steuereinheit so verbunden sind, dass jede einzelne elektrisch leitfähige Oberfläche (2) oder elektrisch leitende Schicht gesondert ansteuerbar ist, so dass über elektrische Leitungen ein definierter elektrischer Strom durch die jeweilige elektrisch leitfähige Oberfläche (2) oder elektrisch leitende Schicht oder kein elektrischer Strom fließt, so dass bei einem Aufsetzen der elektrisch leitfähigen Oberflächen (2) oder thermisch leitfähigen Schichten auf die jeweilige Oberfläche des Objektes ein mittels der elektronischen Steuerung vorgegebenes Kennzeichen oder Muster eingebrannt wird.

2. Vorrichtung nach Anspruch 1, **dadurch gekennzeichnet, dass** die elektrisch leitfähigen Oberflächen (2) oder elektrisch leitenden Schichten und/oder die elektrischen Leitungen mit einem elektrisch leitfähigen Material gebildet und auf die aus ansonsten elektrisch nicht leitendem Material gebildeten Erwärmungseinheiten als elektrische Leiterbahnen aufgedruckt sind.

3. Vorrichtung nach einem der vorhergehenden Ansprüche, **dadurch gekennzeichnet, dass** die Querschnittsfläche der elektrischen Leitungen größer als die Querschnittsfläche der elektrisch leitenden Oberflächen (2) oder elektrisch leitenden Schichten ist.

4. Vorrichtung nach einem der vorhergehenden Ansprüche, **dadurch gekennzeichnet, dass** die elektronische Steuerung an eine elektrische Spannungsquelle angeschlossen ist, mit der ein elektrischer Stromfluss durch die elektrisch leitfähigen Oberflächen (2) oder elektrisch leitenden Schichten erreichbar ist, mit dem eine Erwärmung der elektrisch leitfähigen Oberflächen (2) oder der thermisch leitfähigen Schichten auf eine Temperatur von mindestens 250 °C erreichbar ist.

5. Vorrichtung nach einem der vorhergehenden Ansprüche, **dadurch gekennzeichnet, dass** der durch die jeweiligen elektrisch leitfähigen Oberflächen (2) oder elektrisch leitenden Schichten fließende elektrische Strom jeweils individuell einstellbar ist.

6. Vorrichtung nach einem der vorhergehenden Ansprüche, **dadurch gekennzeichnet, dass** die elektrisch leitfähigen Oberflächen (2) oder elektrisch leitenden Schichten mit zugehörigen thermisch leitfähigen Schichten in einer Reihen-, Reihen- und Spaltenanordnung oder in einer Anordnung mit mehreren Kreisringen, die unterschiedliche Durchmesser aufweisen, angeordnet sind.

7. Vorrichtung nach einem der vorhergehenden Ansprüche, **dadurch gekennzeichnet, dass** elektrisch leitfähige Oberflächen (2) oder thermisch leitfähige Schichten mit einer Fläche kleiner 1 mm² ausgebildet sind und/oder zwischen nebeneinander angeordneten elektrisch leitfähigen Oberflächen (2) oder thermisch leitfähigen Schichten ein Spaltmaß von maximal 0,1 mm eingehalten ist.

8. Vorrichtung nach einem der vorhergehenden Ansprüche, **dadurch gekennzeichnet, dass** alle elektrisch leitfähigen Oberflächen (2) thermisch leitfähigen Schichten einer in einer Ebene angeordnet sind.

9. Vorrichtung nach einem der vorhergehenden Ansprüche, **dadurch gekennzeichnet, dass** thermisch leitfähige Schichten mit einem Polymer oder einem keramischen Werkstoff gebildet sind.
